# EUROPÄISCHE PATENTSCHRIFT

(11) **EP 3 488 479 B1**
(45) Veröffentlichungstag und Bekanntmachung des Hinweises auf die Patenterteilung: **17.06.2020**
(21) Anmeldenummer: 17737478.2
(22) Anmeldetag: 06.07.2017
(51) Int. Cl.: H01M 4/136, H01M 4/1397, H01M 10/05

(54) **ELEKTRODE, ELEKTROCHEMISCHER ENERGIESPEICHER MIT EINER ELEKTRODE UND VERFAHREN ZUR HERSTELLUNG EINER ELEKTRODE**
ELECTRODE, ELECTROCHEMICAL ENERGY ACCUMULATOR WITH AN ELECTRODE, AND METHOD FOR PRODUCING AN ELECTRODE
ÉLECTRODE, ACCUMULATEUR D'ÉNERGIE ÉLECTROCHIMIQUE COMPRENANT UNE ÉLECTRODE ET PROCÉDÉ DE FABRICATION D'UNE ÉLECTRODE

(30) Priorität: 21.07.2016 DE 102016008918
(43) Veröffentlichungstag der Anmeldung: 29.05.2019
(73) Patentinhaber: Daimler AG, 70372 Stuttgart (DE)
(72) Erfinder: HINTENNACH, Andreas, 71732 Tamm (DE)
(74) Vertreter: JENSEN & SON
(86) Internationale Anmeldenummer: PCT/EP2017/000801
(87) Internationale Veröffentlichungsnummer: WO 2018/014997

(56) Entgegenhaltungen:
- WO-A1-01/04973
- DE-A1-102013 222 145
- DE-A1-102013 226 011

## Beschreibung

Die Erfindung betrifft eine Elektrode für einen elektrochemischen Energiespeicher gemäß dem Oberbegriff des Anspruchs 1. Die Erfindung betrifft weiterhin einen elektrochemischen Energiespeicher mit einer solchen Elektrode. Ferner betrifft die Erfindung ein Verfahren zur Herstellung einer solchen Elektrode.

Elektroden für elektrochemische Energiespeicher sind aus dem Stand der Technik bekannt. Beispielsweise ist in der DE 11 2014 003 358 T5 eine positive Elektrode für eine Lithium-Schwefel-Batterie beschrieben, welche Partikel aus schwefelbasiertem, aktivem Material und eine Kohlenstoffbeschichtung umfasst, welche die Partikel aus schwefelbasiertem, aktivem Material einkapselt. Des Weiteren umfasst die positive Elektrode eine Strukturbeschichtung, die an einer Oberfläche der Kohlenstoffbeschichtung gebildet ist. Die Strukturbeschichtung ist aus der Gruppe ausgewählt, die aus einer Strukturbeschichtung aus einem Metalloxid-Verbundwerkstoff, einer Strukturbeschichtung aus einem gemischten Kohlenstoff- und Metalloxid-Verbundwerkstoff und einer Polymer-Strukturbeschichtung besteht.

Weiterhin ist aus der DE 10 2013 222 145 A1 eine Lithium-Schwefel-Batterie beschrieben, die eine festes Lithium enthaltende Anode und eine Schwefelverbindung enthaltende Kathode mit einer Metalloxidbeschichtung umfasst.

Der Erfindung liegt die Aufgabe zu Grunde, eine gegenüber dem Stand der Technik verbesserte Elektrode, einen verbesserten elektrochemischen Energiespeicher und ein geeignetes Verfahren zur Herstellung einer solchen Elektrode anzugeben.

Hinsichtlich der Elektrode wird die Aufgabe erfindungsgemäß mit den in Anspruch 1 angegebenen Merkmalen gelöst. Hinsichtlich des elektrochemischen Energiespeichers wird die Aufgabe erfindungsgemäß mit den in Anspruch 7 angegebenen Merkmalen gelöst. Hinsichtlich des Verfahrens wird die Aufgabe erfindungsgemäß mit den in Anspruch 9 angegebenen Merkmalen gelöst.

Vorteilhafte Ausgestaltungen der Erfindung sind Gegenstand der Unteransprüche.

Eine Elektrode für einen elektrochemischen Energiespeicher mit einer Katalysatorschicht umfasst eine elektrisch leitfähige Matrix und ein chemisch aktives Material, welches in die elektrisch leitfähige Matrix interkaliert ist. Die elektrisch leitfähige Matrix ist beispielsweise eine poröse und mechanisch flexible Kohlenstoffstruktur. Dazu wird beispielsweise Graphit oder Ruß verwendet, welche jeweils eine gute elektrische Leitfähigkeit aufweisen. Als chemisch aktives Material wird beispielsweise Schwefel in die elektrisch leitfähige Matrix interkaliert. Als chemisch aktives Material wird hierbei ein Material verstanden, welches im Betrieb der Elektrode, insbesondere im Betrieb eines die Elektrode umfassenden elektrochemischen Energiespeichers, oxidiert beziehungsweise reduziert wird.

Erfindungsgemäß ist vorgesehen, dass die Katalysatorschicht mit einer Schutzbeschichtung versehen ist, die zumindest ein Metalloxid und Methionin umfasst.

Mittels der Schutzbeschichtung wird das chemisch aktive Material vor einem Herauslösen aus der elektrisch leitfähigen Matrix geschützt. Das Herauslösen des chemisch aktiven Materials aus der elektrisch leitfähigen Matrix kann während eines Entladevorgangs des elektrochemischen Energiespeichers stattfinden, wobei kurzkettige und/oder langkettige Polyverbindungen, insbesondere Polysulfide, des chemisch aktiven Materials, die bei einem vorhergehenden Ladevorgang möglicherweise nicht vollständig elementarisiert wurden, z. B. zu elementarem Schwefel, aus der Katalysatorschicht austreten und über einen Elektrolyten zu einer Gegenelektrode wandern. An der Gegenelektrode reagieren die Polyverbindungen mit einem chemisch aktiven Material der Gegenelektrode, z. B. Lithium, und können dabei eine Schicht ausbilden, die eine Kapazität und damit eine Lebensdauer des elektrochemischen Energiespeichers erheblich verringern. Zudem wird das in der elektrisch leitfähigen Matrix der Elektrode eingebundene, chemisch aktive Material sukzessive abgebaut und ein Risiko eines Kurzschlusses zwischen der Elektrode und der Gegenelektrode steigt signifikant an.

Die das Methionin und das zumindest eine Metalloxid umfassende Schutzbeschichtung ist dabei nur für bestimmte Ionen, beispielsweise Lithium-Ionen, permeabel, jedoch nicht für Polyverbindungen des chemisch aktiven Materials der Elektrode, wie beispielsweise Polysulfid. Damit wird sichergestellt, dass nur ein chemisch aktives Material, z. B. Lithium, einer mit der Elektrode zusammenwirkenden Gegenelektrode die Schutzbeschichtung passieren kann und das chemisch aktive Material der Elektrode in der Katalysatorschicht der Elektrode verbleibt.

Methionin, auch bekannt als 2-Amino-4-methylmercaptobuttersäure, ist eine schwefelhaltige, proteinogene Aminosäure und ist aufgrund seiner besonders guten chemischen Stabilität zur Verwendung in der Elektrode als Teil der Schutzbeschichtung geeignet. Das zumindest eine Metalloxid, z. B. Aluminiumoxid, ist eine Sauerstoffverbindung eines metallischen Elements, z. B. Aluminium, und weist elektrisch isolierende Eigenschaften auf. Dabei ist das zumindest eine Metalloxid ionenselektiv ausgebildet und für bestimmte Ionen, beispielsweise Lithium-Ionen, permeabel. Ermöglicht wird dies mit Vorgabe einer Porengröße von weniger als 2 Mikrometern mit einer Schichtdicke von mehr als 3,5 Mikrometern. Des Weiteren ist das Metalloxid chemisch stabil gegenüber einem Elektrolyten, welcher als Übertragungsmedium des chemisch aktiven Materials der Gegenelektrode zwischen der Elektrode und Gegenelektrode angeordnet ist. Aufgrund der Semipermeabilität der Schutzbeschichtung dringt der Elektrolyt zumindest teilweise in diese ein. Da sowohl Methionin als auch das Metalloxid unter dem Einfluss des Elektrolyten weitestgehend chemisch stabil sind, bleibt eine Funktion der Schutzbeschichtung im Betrieb des elektrochemischen Energiespeichers erhalten.

Vorzugsweise ist die Schutzbeschichtung derart ausgebildet, dass diese die Katalysatorschicht vollständig umschließt. Damit bietet die Schutzbeschichtung einen vollständigen Schutz vor einem Herauslösen des chemisch aktiven Materials aus der elektrisch leitfähigen Matrix. Die Schutzbeschichtung kann zusätzlich auch ein Substrat mit umschließen, auf welchem die Katalysatorschicht aufgebracht ist.

Gemäß einem Ausführungsbeispiel ist die Schutzbeschichtung zweischichtig ausgebildet und umfasst eine das Methionin enthaltende Methioninschicht und eine das zumindest eine Metalloxid enthaltende Metalloxidschicht. Die Ausbildung der Schutzbeschichtung mit zwei separaten Schichten ermöglicht einen optimalen Schutz der Katalysatorschicht vor dem Herauslösen des chemisch aktiven Materials aus der elektrisch leitfähigen Matrix aufgrund der chemischen Stabilität beider Schichten. Des Weiteren kann mittels der Methioninschicht eine Schichtdicke der Metalloxidschicht gegenüber dem Stand der Technik verringert werden, so dass die elektrisch isolierenden Eigenschaften der Metalloxidschicht begrenzt werden und negative Effekte einer zu großen Schichtdicke, wie beispielsweise verringerte Reduktions- und Oxidationsprozesse, verringert werden.

Vorzugsweise ist die Methioninschicht auf der Katalysatorschicht abgeschieden und bildet somit eine untere oder innere Schicht, die direkt auf einer Oberfläche der Katalysatorschicht angeordnet ist. Die Metalloxidschicht ist auf der Methioninschicht abgeschieden und bildet eine obere oder äußere Schicht. Die beiden Schichten sind dabei in Form eines sogenannten In-situ-Komposits miteinander verbunden, so dass zumindest in einem sich angrenzenden Bereich der Schichten eine (In situ-) Vernetzung erfolgt.

Vorzugsweise ist die Metalloxidschicht als eine Aluminiumoxidschicht ausgebildet. Ein in dieser Schicht enthaltenes Aluminiumoxid liegt beispielsweise in Form von Nanopartikeln vor. Aluminiumoxid zeichnet sich insbesondere durch eine schnelle Flüssigkeitsaufnahme, eine hohe Porosität, eine gute mechanische Festigkeit und eine sehr geringe Schrumpfungsneigung unter thermischer Belastung aus.

Es ist weiterhin ein elektrochemischer Energiespeicher vorgesehen, welcher mindestens eine oben beschriebene erfindungsgemäße Elektrode oder ein Ausführungsbeispiel der Elektrode und mindestens eine Gegenelektrode umfasst. Beispielsweise ist die mindestens eine Elektrode als eine Kathode und die mindestens eine Gegenelektrode als eine Anode ausgebildet. Der elektrochemische Energiespeicher ist dabei entweder als eine Einzelzelle für einen Zellverbund oder als ein Zellverbund mit einer Mehrzahl von Einzelzellen ausgebildet. Beispielsweise ist der elektrochemische Energiespeicher als eine Lithium-Schwefel-Zelle ausgebildet, bei der als Aktivmaterial für die Kathode Schwefel und für die Anode Lithium verwendet wird. Alternativ kann der elektrochemische Energiespeicher auch als eine andere Metall-Schwefel-Zelle ausgebildet sein, z. B. als Natrium-Schwefel-Zelle.

Der elektrochemische Energiespeicher ist gegenüber konventionellen elektrochemischen Energiespeichern verbessert, da aufgrund der Schutzbeschichtung ein Herauslösen des chemisch aktiven Materials aus der Katalysatorschicht der Elektrode vermieden oder zumindest verringert wird. Dies ermöglicht in vorteilhafter Art und Weise eine erhöhte Lebensdauer des elektrochemischen Energiespeichers.

Bei einem Verfahren zur Herstellung einer oben genannten erfindungsgemäßen Elektrode oder einem Ausführungsbeispiel der Elektrode wird ein chemisch aktives Material in eine elektrisch leitfähige Matrix zur Ausbildung einer Katalysatorschicht der Elektrode interkaliert und die Katalysatorschicht wird mit einer Schutzbeschichtung versehen, die zumindest ein Metalloxid und Methionin umfasst.

Mittels des Verfahrens kann eine gegenüber konventionellen Elektroden verbesserte Elektrode hergestellt werden, bei der die Menge an chemisch aktivem Material gegenüber konventionellen Elektroden über einen längeren Zeitraum konstant bleibt. Ein die Elektrode umfassender Energiespeicher kann damit hinsichtlich einer Lebensdauer und einer Funktion optimiert werden.

In einem Ausführungsbeispiel werden zur Herstellung der Elektrode folgende Schritte durchgeführt. In einem ersten Schritt wird die Katalysatorschicht auf ein Substrat aufgebracht. Weiterhin wird Methionin in Pulverform bereitgestellt und eine Methioninschicht mittels Abscheiden des pulverförmigen Methionins auf der Katalysatorschicht ausgebildet. Ferner werden eine metallhaltige Vorläuferverbindung und eine Gegenverbindung bereitgestellt. Anschließend wird die Metalloxidschicht mittels Abscheiden mindestens einer Lage der metallhaltigen Vorläuferverbindung auf der Methioninschicht und anschließendem Aufbringen der Gegenkomponente auf die abgeschiedene, metallhaltige Vorläuferverbindung ausgebildet.

Das Abscheiden der Methioninschicht sowie das Abscheiden der Metalloxidschicht erfolgen jeweils bei Temperaturen, die unterhalb einer Schmelztemperatur des chemisch aktiven Materials der Elektrode liegen. Das Abscheiden des Methionins erfolgt beispielsweise bei Raumtemperatur, d. h. bei einer Temperatur von ca. 25°C. Zur Abscheidung der Methioninschicht wird das pulverförmige Methionin möglichst gleichmäßig auf der Katalysatorschicht verteilt. Die Abscheidung kann beispielsweise mittels elektrostatischer Abscheidung oder Pulverabscheidung erfolgen. Die Abscheidung der Metalloxidschicht erfolgt beispielsweise mittels Atomlagenabscheidung bei einer Temperatur zwischen 80°C und 100°C. Diese Temperatur liegt unterhalb einer Schmelztemperatur von Schwefel, welche 127°C beträgt. Damit wird im Falle einer schwefelhaltigen Elektrode der in der Katalysatorschicht interkalierte Schwefel bei der Abscheidung nicht angegriffen.

Eine absolute Porengröße sowie ein Verteilung der Poren und eine absolute Schichtdicke der Schutzbeschichtung können individuell vorgegeben werden.

Ausführungsbeispiele der Erfindung werden im Folgenden anhand von Zeichnungen näher erläutert.

Dabei zeigen:
- Fig. 1: schematisch eine Schnittdarstellung eines Ausführungsbeispiels eines elektrochemischen Energiespeichers mit einer Elektrode und einer Gegenelektrode und
- Fig. 2: schematisch einen beispielhaften Ablauf eines Verfahrens zur Herstellung einer Elektrode für einen elektrochemischen Energiespeicher.

Einander entsprechende Teile sind in allen Figuren mit den gleichen Bezugszeichen versehen.

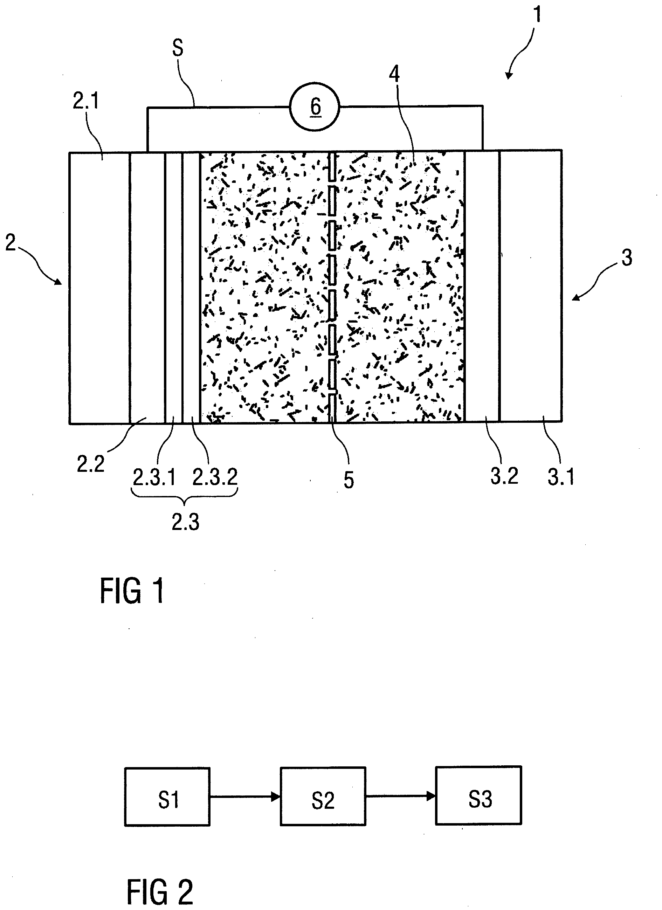

Figur 1 zeigt schematisch einen Längsschnitt eines elektrochemischen Energiespeichers 1, welcher beispielsweise als eine Einzelzelle für eine aufladbare Batterie, z. B. eine Lithium-Schwefel-Batterie, ausgebildet ist.

Der elektrochemische Energiespeicher 1 umfasst eine Elektrode 2 und eine Gegenelektrode 3, wobei die Elektrode 2 als eine Kathode und die Gegenelektrode 3 als eine Anode ausgebildet ist. Zwischen der Elektrode 2 und der Gegenelektrode 3 ist ein ionenleitender Elektrolyt 4 angeordnet. Weiterhin ist zwischen der Elektrode 2 und der Gegenelektrode 3 ein ionenleitender Separator 5 angeordnet.

Die Elektrode 2 umfasst ein Substrat 2.1, welches mit einer Katalysatorschicht 2.2 versehen ist. Das Substrat 2.1 ist aus einem elektrisch isolierenden Material gebildet und umfasst beispielsweise Polycarbonat. Die Katalysatorschicht 2.2 ist als ein Verbundmaterial ausgebildet und umfasst eine elektrisch leitfähige Matrix und ein chemisch aktives Material.

Die elektrisch leitfähige Matrix ist aus einer elektrisch leitfähigen, porösen und mechanisch flexiblen Kohlenstoffstruktur, wie z. B. Graphit oder Ruß, gebildet. In die elektrisch leitfähige Matrix ist das chemisch aktive Material interkaliert, welches hierbei Schwefelverbindungen, insbesondere Schwefel, umfasst.

Die Gegenelektrode 3 umfasst ebenfalls ein Substrat 3.1, z. B. Polycarbonat, welches mit einer Katalysatorschicht 3.2 versehen ist. Die Katalysatorschicht 3.2 ist auch hier als ein Verbundmaterial ausgebildet und umfasst eine elektrisch leitfähige Matrix und ein chemisch aktives Material. Die elektrisch leitfähige Matrix für die Gegenelektrode 3 ist beispielsweise aus einer elektrisch leitfähigen Kohlenstoffstruktur und einer Siliziumstruktur gebildet. Das chemisch aktive Material ist hierbei Lithium oder eine Lithiumlegierung.

Der Elektrolyt 4 umfasst eine flüssige, nicht-wässrige Elektrolytlösung, in der beispielsweise ein nicht-wässriges Lösungsmittel und ein darin gelöstes Lithiumsalz enthalten sind. Der Separator 5 ist beispielsweise als eine semipermeable, insbesondere für Ionen permeable, Membran ausgebildet, die z. B. aus einer mikroporösen Keramik, einem mikroporösen polymeren Folie oder aus einem mikroporösen Glasfaservlies gebildet ist.

Die chemisch aktiven Materialien der Elektrode 2 und Gegenelektrode 3 können homogen über die gesamte Elektrode 2 bzw. Gegenelektrode 3 in deren elektrisch leitfähige Matrizen eingebunden werden. Die chemisch aktiven Materialien dienen dabei einer zwischen der Elektrode 2 und der Gegenelektrode 3 ablaufenden chemischen Reaktion, insbesondere bei einem Ladevorgang und Entladevorgang des elektrochemischen Energiespeichers 1, wie es nachfolgend am Beispiel einer Lithium-Schwefel-Batterie näher beschrieben wird.

Beim Entladen des elektrochemischen Energiespeichers 1 wird das in der Gegenelektrode 3 interkalierte Lithium in Lithium-Ionen und Elektronen oxidiert. Die Lithium-Ionen wandern durch den Elektrolyten 4 zur Elektrode 2, während gleichzeitig die Elektronen über einen äußeren Stromkreis S von der Gegenelektrode 3 zur Elektrode 2 übertragen werden. Dabei ist im äußeren Stromkreis S ein Energieverbraucher 6 angeordnet, welcher durch den Elektronenstrom mit Energie versorgt wird. An der Elektrode 2 werden die Lithium-Ionen durch eine Reduktionsreaktion aufgenommen, wobei der Schwefel zu Lithiumsulfid reduziert wird. Die elektrochemische Reaktion beim Entladen des elektrochemischen Energiespeichers 1 kann wie folgt beschrieben werden:
Gegenelektrode 3: Li → Li⁺ + e⁻ und
Elektrode 2 : S₈ + 2Li+ + e⁻ → Li₂S₈ → Li₂S₆ → Li₂S₄ → Li₂S₂ → Li₂S.

Beim Laden des elektrochemischen Energiespeichers 1 wird an die Elektrode 2 und die Gegenelektrode 3 eine Energiequelle (nicht dargestellt) angeschlossen. Dabei wird in der Elektrode 2 Lithium aus Lithiumsulfid zu Lithium-Kationen und Elektronen oxidiert, wobei die Lithium-Kationen über den Elektrolyten 4 und die Elektronen über den äußeren Stromkreis S zurück zur Gegenelektrode 3 wandern.

Die Einlagerung des chemisch aktiven Materials, d. h. beispielsweise der Lithium-Ionen, beim Ladevorgang des elektrochemischen Energiespeichers 1 sowie die Auslagerung des chemisch aktiven Materials beim Entladen des elektrochemischen Energiespeichers 1 führen in bekannter Weise zu sehr starken volumetrischen Änderungen der Elektrode 2 und der Gegenelektrode 3. Dies wird auch als "Atmen" der Elektrode 2 bzw. der Gegenelektrode 3 bezeichnet.

Beim Entladen des elektrochemischen Energiespeichers 1 können kurzkettige Polysulfide, z. B. Li₂S₂, und/oder langkettige Polysulfide, z. B. Li₂S₈, Li₂S₆, die beim vorhergehenden Ladevorgang möglicherweise nicht vollständig zu elementaren Schwefel in der Elektrode 2 umgewandelt wurden, aus der Katalysatorschicht 2.2 der Elektrode 2 herausdiffundieren und über den Elektrolyten 4 zur Gegenelektrode 3 wandern, da diese im Elektrolyten 4 nicht löslich sind. An der Gegenelektrode 3 kann sich mittels der Polysulfide eine Lithiumsulfid-Schicht bilden, die eine Kapazität und damit eine Lebensdauer des elektrochemischen Energiespeichers 1 erheblich verringern. Zudem wird das in der elektrisch leitfähigen Matrix der Elektrode 2 eingebundene, chemisch aktive Material sukzessive abgebaut und ein Risiko eines Kurzschlusses zwischen der Elektrode 2 und der Gegenelektrode 3 steigt signifikant an.

Um ein Herauslösen des chemisch aktiven Materials aus der Elektrode 2 zu verhindern oder zumindest zu verringern, wird die Katalysatorschicht 2.2 mit einer Schutzbeschichtung 2.3 versehen, die im Folgenden näher beschrieben wird.

Die Schutzbeschichtung 2.3 ist vorzugsweise zweiteilig ausgebildet und umfasst eine Methionin enthaltende Methioninschicht 2.3.1 und eine zumindest ein Metalloxid enthaltende Metalloxidschicht 2.3.2. Dabei ist die Methioninschicht 2.3.1 direkt auf der Katalysatorschicht 2.2 abgeschieden und bildet somit eine untere oder innere Schicht der Schutzbeschichtung 2.3.

Das in der Methioninschicht 2.3.1 enthaltene Methionin ist eine schwefelhaltige, proteinogene Aminosäure, auch bekannt als 2-Amino-4-methylmercaptobuttersäure, und ist aufgrund seiner besonders guten chemischen Stabilität zur Verwendung in der Elektrode 2 als Teil der Schutzbeschichtung 2.3 geeignet.

Die Metalloxidschicht 2.3.2 ist auf der Methioninschicht 2.3.1 abgeschieden und bildet eine obere oder äußere Schicht der Schutzbeschichtung 2.3. Beispielsweise ist die Metalloxidschicht 2.3.2 als Aluminiumoxidschicht ausgebildet. Die Metalloxidschicht 2.3.2 ist dabei eine Sauerstoffverbindung eines Metalls und weist elektrisch isolierende Eigenschaften auf. Ferner ist die Metalloxidschicht 2.3.2 ionenselektiv ausgebildet und für Ionen der Gegenelektrode 3, beispielsweise Lithium-Ionen, permeabel. Ermöglicht wird dies mit Vorgabe einer Porengröße für die Metalloxidschicht 2.3.2 von weniger als 2 Mikrometern und einer Schichtdicke von mehr als 3,5 Mikrometern. Des Weiteren ist die Metalloxidschicht 2.3.2 chemisch stabil gegenüber dem Elektrolyten 4. Dies ist insbesondere deshalb vorteilhaft, da aufgrund der Semipermeabilität der Metalloxidschicht 2.3.2 der Elektrolyt 4 zumindest teilweise in die Metalloxidschicht 2.3.2 und in die Methioninschicht 2.3.1 eindringt.

Sowohl die Methioninschicht 2.3.1 als auch die Metalloxidschicht 2.3.2 sind permeabel für das chemisch aktive Material der Gegenelektrode 3, jedoch impermeabel für das chemisch aktive Material der Elektrode 2. Insbesondere sind die Methioninschicht 2.3.1 und die Metalloxidschicht 2.3.2 impermeabel für Polysulfidverbindungen.

An einer Grenzfläche zwischen der Methioninschicht 2.3.1 und der Metalloxidschicht 2.3.2 sind diese miteinander vernetzt, so dass die Methioninschicht 2.3.1 und die Metalloxidschicht 2.3.2 in Form eines sogenannten In-situ-Komposits miteinander verbunden sind.

Figur 2 zeigt einen beispielhaften Ablauf eines Verfahrens zur Herstellung der in Figur 1 beschriebenen Elektrode 2.

In einem ersten Schritt S1 wird die Katalysatorschicht 2.2 auf das Substrat 2.1 aufgebracht. Die Katalysatorschicht 2.2 kann beispielsweise mittels Sputterbeschichtung oder Atomlagenabscheidung auf das Substrat 2.1 aufgebracht werden.

In einem zweiten Schritt S2 wird die Methioninschicht 2.3.1 auf der Katalysatorschicht 2.2 abgeschieden. Dazu wird pulverförmig bereitgestelltes Methionin auf der Katalysatorschicht 2.2 möglichst gleichmäßig verteilt und beispielsweise mittels elektrostatischer Abscheidung abgeschieden. Hierbei wird das Methionin elektrisch aufgeladen, z .B. mittels Hochspannung oder Reibung, und anschließend auf der Katalysatorschicht 2.2 verteilt. Eine Verteilung des Methionins auf der Katalysatorschicht 2.2 erfolgt vorzugsweise mittels einer gleichmäßigen Verteilung feinverteilter Kristalle auf der Oberfläche der Katalysatorschicht 2.2. Die Katalysatorschicht 2.2 kann zusätzlich mit einem elektrischen Potential beaufschlagt werden, um eine elektrostatische Haftung des Methionins auf der Katalysatorschicht 2.2 zu verbessern. Alternativ kann die Ausbildung der Methioninschicht 2.3.1 auch mittels Pulverlackierung erfolgen. Eine homogene Ausbildung der Methioninschicht 2.3.1 ist dabei nicht zwingend erforderlich, da die Methioninschicht 2.3.1 unter einem späteren Einfluss des Elektrolyten 4 teilweise von der Katalysatorschicht 2.2 abgelöst wird. Eine Temperatur beim Abscheiden des Methionins entspricht einer Raumtemperatur von ca. 25°C.

In einem dritten Schritt S3 wird die Metalloxidschicht 2.3.2 auf der Methioninschicht 2.3.1 ausgebildet. Dies erfolgt beispielsweise mittels Atomlagenabscheidung. Hierbei werden zuerst eine metallhaltige Vorläuferverbindung und eine Gegenverbindung bereitgestellt. Anschließend wird die Metalloxidschicht 2.3.2 mittels Abscheiden mindestens einer Lage der metallhaltigen Vorläuferverbindung auf der Methioninschicht 2.3.1 und anschließendem Aufbringen der Gegenkomponente auf die abgeschiedene, metallhaltige Vorläuferverbindung ausgebildet.

Am konkreten Beispiel einer Abscheidung von Aluminiumoxid kann beispielsweise Trimethylaluminium als metallhaltige Vorläuferverbindung verwendet werden, welches in Gegenwart von Wasser als Gegenverbindung hochreaktiv ist. Zur Abscheidung wird Trimethylaluminium beispielsweise in eine Reaktionskammer eingebracht, in welcher sich auch die Elektrode 2 befindet. Nach einer vorgegebenen Zeit wird ein Überschuss an Vorstufenmolekülen mittels Pumpen entfernt, um eine ungewollte chemische Reaktion zu einem späteren Zeitpunkt zu verhindern. Darauffolgend wird als Gegenverbindung beispielsweise Wasserdampf in die Reaktionskammer eingebracht, welcher mit dem Trimethylaluminium zu Aluminiumoxid reagiert. Überschüssiges Wasser und gegebenenfalls Reaktionsprodukte werden anschließend ebenfalls mittels Pumpen entfernt.

Die Abscheidung der Metalloxidschicht 2.3.2 erfolgt bei einer Temperatur zwischen 80°C und 100°C und liegt somit unterhalb einer Schmelztemperatur von Schwefel, welche oberhalb von 127°C liegt. Damit wird der in der elektrisch leitfähigen Matrix der Katalysatorschicht 2.2 interkalierte Schwefel bei der Abscheidung nicht angegriffen.

Bei der derart hergestellten Elektrode 2 wird ein Herauslösen des in der elektrisch leitfähigen Matrix interkalierten Schwefels auch bei hohen Temperaturen verringert, vorzugsweise vermieden. Wird bei einer nicht vorgesehenen Reaktion oder bei einer kurzfristigen Temperaturüberschreitung dennoch Schwefel aus der Katalysatorschicht 2.2 herausgelöst, bleibt dieser weiterhin elektrisch kontaktiert und kann in späteren Ladezyklen wieder in die elektrisch leitfähige Matrix eingelagert werden.

## Patentansprüche

1. Elektrode (2) für einen elektrochemischen Energiespeicher (1) mit einer Katalysatorschicht (2.2), umfassend
- eine elektrisch leitfähige Matrix und
- ein chemisch aktives Material, welches in die elektrisch leitfähige Matrix interkaliert ist,
**dadurch gekennzeichnet, dass** die Katalysatorschicht (2.2) mit einer Schutzbeschichtung (2.3) versehen ist, die zumindest ein Metalloxid und Methionin umfasst.

2. Elektrode (2) nach Anspruch 1,
**dadurch gekennzeichnet, dass** die Schutzbeschichtung (2.3) die Katalysatorschicht (2.2) vollständig umschließt.

3. Elektrode (2) nach Anspruch 1 oder 2,
**dadurch gekennzeichnet, dass** die Schutzbeschichtung (2.3) zweischichtig ausgebildet ist und eine das Methionin enthaltende Methioninschicht (2.3.1) und eine das zumindest eine Metalloxid enthaltende Metalloxidschicht (2.3.2) umfasst.

4. Elektrode (2) nach Anspruch 3,
**dadurch gekennzeichnet, dass** die Methioninschicht (2.3.1) auf der Katalysatorschicht (2.2) abgeschieden ist.

5. Elektrode (2) nach Anspruch 3 oder 4,
**dadurch gekennzeichnet, dass** die Metalloxidschicht (2.3.2) auf der Methioninschicht (2.3.1) abgeschieden ist.

6. Elektrode (2) nach einem der vorhergehenden Ansprüche,
**dadurch gekennzeichnet, dass** die Metalloxidschicht (2.3.2) als eine Aluminiumoxidschicht ausgebildet ist.

7. Elektrochemischer Energiespeicher (1), umfassend
- mindestens eine Elektrode (2) nach einem der vorhergehenden Ansprüche und
- mindestens eine Gegenelektrode (3).

8. Elektrochemischer Energiespeicher (1) nach Anspruch 7,
**dadurch gekennzeichnet, dass** die mindestens eine Elektrode (2) als eine Kathode und die mindestens eine Gegenelektrode (3) als eine Anode ausgebildet ist.

9. Verfahren zur Herstellung einer Elektrode (2) nach einem der Ansprüche 1 bis 6, wobei
- ein chemisch aktives Material in eine elektrisch leitfähige Matrix zur Ausbildung einer Katalysatorschicht (2.2) der Elektrode (2) interkaliert wird und
- die Katalysatorschicht (2.2) mit einer Schutzbeschichtung (2.3) versehen wird, die zumindest ein Metalloxid und Methionin umfasst.

10. Verfahren nach Anspruch 9,
umfassend folgende Schritte:
- Aufbringen der Katalysatorschicht (2.2) auf ein Substrat,
- Bereitstellen von Methionin in Pulverform,
- Bereitstellen einer metallhaltigen Vorläuferverbindung und einer Gegenverbindung,
- Ausbilden der Methioninschicht (2.3.1) mittels Abscheiden des pulverförmigen Methionins auf der Katalysatorschicht (2.2) und
- Ausbilden der Metalloxidschicht (2.3.2) mittels Abscheiden mindestens einer Lage der metallhaltigen Vorläuferverbindung auf der Methioninschicht (2.3.1) und anschließendem Aufbringen der Gegenkomponente auf die abgeschiedene metallhaltigen Vorläuferverbindung.

## Claims

1. Electrode (2) for an electrochemical energy accumulator (1) with a catalyst layer (2.2), comprising
- an electrically conductive matrix and
- a chemically active material intercalated into the electrically conductive matrix,
**characterised in that** the catalyst layer (2.2) is provided with a protective coating (2.3) comprising at least one metal oxide and methionine.

2. Electrode (2) according to claim 1,
**characterised in that** the protective coating (2.3) completely encloses the catalyst layer (2.2).

3. Electrode (2) according to claim 1 or 2,
**characterised in that** the protective coating (2.3) is two-layered, comprising a methionine layer (2.3.1) containing the methionine and a metal oxide layer (2.3.2) containing the metal oxide.

4. Electrode (2) according to claim 3,
**characterised in that** the methionine layer (2.3.1) is deposited on the catalyst layer (2.2).

5. Electrode (2) according to claim 3 or 4,
**characterised in that** the metal oxide layer (2.3.2) is deposited on the methionine layer (2.3.1).

6. Electrode (2) according to any of the preceding claims,
**characterised in that** the metal oxide layer (2.3.2) is designed as an aluminium oxide layer.

7. Electrochemical energy accumulator (1), comprising
- at least one electrode (2) according to any of the preceding claims and
- at least one counter-electrode (3).

8. Electrochemical energy accumulator (1) according to claim 7, **characterised in that** the at least one electrode (2) is designed as a cathode and the at least one counter-electrode (3) is designed as an anode.

9. Method for producing an electrode (2) according to any of claims 1 to 6,
wherein
- a chemically active material is intercalated into an electrically conductive matrix to form a catalyst layer (2.2) of the electrode (2) and
- the catalyst layer (2.2) is provided with a protective coating (2.3) comprising at least one metal oxide and methionine.

10. Method according to claim 9,
comprising the following steps:
- the application of a catalyst layer (2.2) to a substrate,
- the provision of methionine in powder form,
- the provision of a metal-containing precursor compound and a counter-compound,
- the forming of the methionine layer (2.3.1) by depositing the powdered methionine on the catalyst layer (2.2) and
- the forming of the metal oxide layer (2.3.2) by depositing at least one layer of the metal-containing precursor compound on the methionine layer (2.3.1) followed by the application of the counter-component to the deposited metal-containing precursor compound.

## Revendications

1. Electrode (2) pour un accumulateur d'énergie électrochimique (1) dotée d'une couche de catalyseur (2.2), comprenant
- une matrice électro-conductrice et
- un matériau actif chimiquement, qui est intercalé dans la matrice électro-conductrice,
**caractérisée en ce que** la couche de catalyseur (2.2) étant revêtu d'un revêtement de protection (2.3) qui comprend au moins un oxyde métallique et de la méthionine.

2. Electrode (2) selon la revendication 1, **caractérisée en ce que** le revêtement de protection (2.3) entoure entièrement la couche de catalyseur (2.2).

3. Electrode (2) selon la revendication 1 ou 2, **caractérisée en ce que** le revêtement de protection (2.3) est constitué de deux couches et comprend une couche de méthionine (2.3.1) contenant de la méthionine et une couche d'oxyde métallique (2.3.2) contenant ledit oxyde métallique.

4. Electrode (2) selon la revendication 3, **caractérisée en ce que** la couche de méthionine (2.3.1) est isolée sur la couche de catalyseur (2.2).

5. Electrode (2) selon la revendication 3 ou 4, **caractérisée en ce que** la couche d'oxyde métallique (2.3.2) est isolée sur la couche de méthionine (2.3.1).

6. Electrode (2) selon l'une quelconque des revendications précédentes, **caractérisée en ce que** la couche d'oxyde métallique (2.3.2) est conçue sous la forme d'une couche d'oxyde d'aluminium.

7. Accumulateur d'énergie électrochimique (1), comprenant
- au moins une électrode (2) selon l'une quelconque des revendications précédentes et
- au moins une contre-électrode (3).

8. Accumulateur d'énergie électrochimique (1) selon la revendication 7, **caractérisé en ce que** ladite électrode (2) est conçue sous la forme de cathode et ladite contre-électrode (3) est conçue sous la forme d'anode.

9. Procédé de fabrication d'une électrode (2) selon l'une quelconque des revendications précédentes 1 à 6,
- un matériau actif chimiquement étant intercalé dans une matrice électro-conductrice pour former une couche de catalyseur (2.2) de l'électrode (2) et
- la couche de catalyseur (2.2) étant pourvue d'un revêtement de protection (2.3) qui comprend au moins un oxyde métallique et de la méthionine.

10. Procédé selon la revendication 9, comprenant les étapes consistant à :
- appliquer la couche de catalyseur (2.2) sur un substrat,
- préparer la méthionine sous forme de poudre,
- préparer un composé précurseur contenant du métal et un composé opposé,
- former la couche de méthionine (2.3.1) par isolation de la méthionine en poudre sur la couche de catalyseur (2.2) et
- former la couche d'oxyde métallique (2.3.2) par isolation d'au moins une couche du composé précurseur contenant du métal sur la couche de méthionine (2.31) et ensuite appliquer le composé opposé sur le composé précurseur isolé contenant du métal.
